# EUROPEAN PATENT SPECIFICATION

(11) **EP 4 412 820 B1**
(45) Date of publication and mention of the grant of the patent: **04.11.2026**
(21) Application number: 21798944.1
(22) Date of filing: 05.10.2021
(51) Int. Cl.: B29C 65/78, B29C 65/02, B29C 65/06, B29C 65/20

(54) **METHOD OF SETTING UP A JOINING DEVICE, METHOD OF JOINING A COVER LENS TO A HOUSING OF A MOTOR VEHICLE LIGHTING DEVICE AND SYSTEM**
VERFAHREN ZUM EINRICHTEN EINER FÜGEVORRICHTUNG, VERFAHREN ZUM FÜGEN EINER ABDECKSCHEIBE MIT EINEM GEHÄUSE EINER KRAFTFAHRZEUGBELEUCHTUNGSEINRICHTUNG UND SYSTEM
MÉTHODE DE MISE EN PLACE D'UN DISPOSITIF D'ASSEMBLAGE, MÉTHODE D'ASSEMBLAGE D'UNE LENTILLE DE RECOUVREMENT À UN BOÎTIER D'UN DISPOSITIF D'ÉCLAIRAGE DE VÉHICULE AUTOMOBILE ET SYSTÈME

(43) Date of publication of application: 14.08.2024
(73) Proprietor: HELLA GmbH & Co. KGaA, 59552 Lippstadt (DE); HELLA Saturnus Slovenija d.o.o., 1001 Ljubljana (SI); Hella Autotechnik Nova s.r.o., 78985 Mohelnice (CZ)
(72) Inventor: ENGLER, Ingo, 59494 Soest (DE); LEBRATO RASTROJO, Miguel, 33104 Paderborn (DE); HERBERS, Thomas, 59555 Lippstadt (DE); SCHMITZ, Andreas, 59597 Erwitte (DE); PETAC, Primoz, 1241 Kamnik (SI); VOVK, Tadej, 2318 Laporje (SI); HABJAN, Jure, Domzale 1230 (SI); SKAPIN, Klemen, 1217 Vodice (SI); KUBAT, Tomas, Koprivnice 74221 (CZ); FRANTISEK, Jane, 78985 Mohelnice (CZ); NEJEZCHLEBA, David, Úsov 789 73 (CZ); BRYS, Rainer, 59557 Lippstadt (DE); VERDIN MORENO, Alfredo, 52920 San Mateo Tecoloapan (MX); RÖBBECKE, Thomas Albert, 59597 Erwitte (DE); GRÜNE, Ludger-Josef, 37671 Höxter (DE)
(74) Representative: Behr-Wenning, Gregor
(86) International application number: PCT/EP2021/077398
(87) International publication number: WO 2023/057048

(56) References cited:
- DE-A1- 102019 127 867

## Description

The present invention relates to a method of setting up a joining device for joining a cover lens to a housing of a motor vehicle lighting device. The invention furthermore relates to an associated method of joining a cover lens to a housing of a motor vehicle lighting device by a joining device, and to a corresponding system.

### PRIOR ART

The installation of a motor vehicle lighting devices in a vehicle body requires that the course of the gap and the contour between the cover lens of the installed lighting device and the vehicle body corresponds to a predetermined course within narrow tolerance limits. The connection to the vehicle body is usually established via the housing of the lighting device, so that a reference-point system for the manufacture of the lighting device is assigned in particular to the housing, wherein the joining pose of the cover lens relative to the housing plays a central role. The present invention addresses the reproducible, dimensionally accurate joining of cover lenses to housings for the series production of motor vehicle lighting devices.

One cause of deviations from the nominal dimensions of the lighting device is dimensional scattering from the individual part production of the cover lens and the housing, which is reflected in the final assembled unit. With regard to this problem, DE 10 2010 024 169 A1 discloses to provide tolerance compensation areas moulded to the joining sections of the cover lens and the housing and to remove the required amount of these compensation areas before joining the lens and the housing in order to join a dimensionally accurate unit.

Another cause for insufficient dimensional accuracy of the lighting device can be an imprecise set-up of the joining device. For example, the cover lens and the housing are joined together as plastic components by means of a welding process, such as friction welding or hot plate welding, or by means of an adhesive bonding process. For this purpose, the cover lens is received in a holding device and the housing is received in a mounting fixture, wherein the holding device and mounting fixture can be moved in translation and/or rotation relative to one another by means of suitable adjustment means. The set-up process of the joining device concerns in particular the determination of a suitable relative positioning of the holding device to the mounting fixture during joining, i.e., such a positioning that corresponds to a desired target pose of the received cover lens on the housing.

In prior art joining processes, the setting-up is usually performed as follows. A first sample of a unit consisting of a cover lens and a housing is joined in an initial positioning of the joining device and then the resulting pose of the cover lens on the housing, which represents the reference-point system on the vehicle body, is measured. Based on this measurement protocol, the positioning of the joining device is then readjusted, i.e., the relative arrangement of the holding device to the mounting fixture is adjusted to correct the measured deviations. In the prior art, this readjustment is usually carried out "manually" on the basis of the practical experience of the responsible operating personnel and, due to the large number of degrees of freedom in the relative positioning of the holding device and the mounting fixture, a large number of test units is usually necessary until the joining device is approximately set up in a target position in which dimensionally accurate units can be joined.

DE 10 2019 127 867 A1 relates to a method for setting up a special joining device with a displaceable and rotatable housing mounting fixture, wherein the set-up process is carried out automatically by means of simulated representations of the joining device in different positions.

### DISCLOSURE OF THE INVENTION

It is an object of the present invention to propose an alternative method of setting up a joining device for joining a cover lens to a housing of a motor vehicle lighting device, which overcomes the aforementioned disadvantages of the prior art and, in particular, enables an economical automatic procedure. Furthermore, the object of the present invention is to provide an associated method for joining a cover lens to a housing of a motor vehicle lighting device.

This object is achieved by a method according to claim 1, a method of joining according to claim 8 and a corresponding system for joining according to claim 10 of the present invention. Advantageous embodiments are defined in the dependent subclaims.

The technical teaching of the invention discloses a method of setting up a joining device for joining a cover lens to a housing of a motor vehicle lighting device, wherein the joining device features a mounting fixture and a robot with a suction head, and wherein the method features at least the following steps:
- inserting a housing into the mounting fixture and a cover lens into the suction head,
- transferring the suction head to an initial joining pose,
- joining the cover lens to the housing with the suction head in the initial joining pose,
- measuring the pose of the cover lens relative to a reference-point system, which comprises reference points on the surface of the housing and/or the cover lens,
- determining a set of translations and/or rotations, which transfer the cover lens to an optimal pose with minimal deviations from a target pose, and
- correcting the initial joining pose of the suction head with the determined set of translations and/or rotations.

The invention is based on the idea of replacing the trial-and-error approach used in the prior art for determining the optimal pose of the cover lens or the suction head when joining the cover lens to the housing by means of a computer-aided best-fit analysis and automating the set-up process on this basis. For this purpose, a component joined in an initial joining pose of the suction head is measured, whereby the pose of the cover lens is quantified using a defined reference-point system. In the process, deviations from the desired pose of the cover lens are typically determined, which are based in particular on dimensional deviations of the components from the individual part production and on the inappropriate initial setup of the joining device. The method according to the invention aims at determining an optimum pose of the cover lens on the housing, which has minimal deviations from the desired pose, as well as a corresponding optimum pose of the suction head during joining. For optimisation, a regression analysis of the measurement data is carried out automatically, in which the regression parameters to be determined correspond to the set of translations and/or rotations sought, which transfer the suction head and thus the cover lens received therein into the respective optimal (joining) pose, whereby in the optimal pose the totality of the dimensional deviations of the cover lens from its target pose in the reference-point system is minimal. With the set of translations and/or rotations determined in this way, the initial joining pose of the suction head is corrected, after which the set-up process is completed and the joining device is prepared for the dimensionally accurate joining of a series of lighting devices to be produced.

The pose of the cover lens on the housing is measured in particular by scanning the surface of the cover in a coordinate-measuring machine or by means of an optical measuring method, for example by means of a laser scanner. The set-up method according to the invention can be used for different joining devices, in particular for joining devices, in which the cover lens is joined to the housing by means of adhesive bonding, or for welding devices, for example based on friction welding or hot plate welding. In general, the set-up method may apply to any device for physical or mechanical joining. The robot is designed, for example, as an articulated robot or as a hexapod.

In a preferred embodiment the reference-point system comprises six reference points each on the surface of the housing and of the cover lens. In particular, the reference points on the housing may correspond to the customer's reference points for receiving the lighting device in a vehicle body. With reference to the reference points on the housing, the pose of the lens in the subsequent mounting position in the vehicle body can thus be quantified and with reference to the reference points on the lens itself, dimensional distortion from the individual part production can be detected.

In particular, a measuring-point system is defined, which features measuring points on the surface of the cover lens, wherein the pose of the cover lens is defined by the positions of the measuring points relative to the reference-point system. Consequently, it is not necessary to measure the entire surface of the cover lens and compare it to the reference-point system, rather, it can be sufficient to define and measure selected measuring points in order to determine the pose of the cover lens. The measuring points can be subdivided into measuring points that are particularly meaningful for a gap dimension of the cover lens, i.e., for the gap between the lighting device and the vehicle body in the final mounting position, as well as for height dimensions of the cover lens, whereby the contour of the lighting device can be described. For example, the measuring-point system comprises about one hundred measuring points.

In a preferred embodiment, the set of translations and/or rotations for correcting the initial joining pose of the suction head is determined by means of linear regression analysis, especially by means of least-squares fitting. The aim of this best-fit analysis is to find the set of translations and/or rotations that transfer the cover lens from its initial pose on the housing to the optimal pose in which the sum of squares of the deviations of all measuring points from their respective nominal positions is minimal. The translations and/or rotations sought thus represent the parameters to be determined by the best-fit evaluation.

In another preferred embodiment, the housing features three hollow screws, which each extend through protruding lugs and which are oriented mutually perpendicular or parallel, wherein each one reference point is defined on the bottom surface of the hollow screws. The bottom surface of the hollow screws is typically used as the contact section for the purpose of mounting the lighting device in a vehicle body and the selected reference points correspond to the mounting reference points (of the OEM customer). By varying the screw-in depth of the hollow screws, the position of the reference points can be influenced in a practical way, which offers a necessary corrective measure in the event that, for example, there are large dimensional deviations from the individual part production of the housing and/or cover lens. Instead of or in addition to the hollow screws, further adjustment means can be provided on the housing for adjusting the reference points.

Advantageously, the mounting fixture receives the housing stress-free at reference points on the surface of the housing. In particular, the housing can be received on the bottom surface of the aforementioned hollow screws.

In a preferred embodiment, the mounting fixture and/or the suction head are provided with position sensors, by means of which a proper insertion of the housing into the mounting fixture and/or of the cover lens into the suction head is controlled. A repeatable, dimensionally accurate pick-up of the components is the prerequisite for the further process.

The invention furthermore relates to a method of joining a cover lens to a housing of a motor vehicle lighting device by a joining device, wherein the joining device features a mounting fixture and a robot with a suction head, and wherein the method features at least the following steps:
- setting up the joining device by the method according to one of the aforementioned embodiments,
- inserting the housing into the mounting fixture and the cover lens into the suction head,
- transferring the suction head to the corrected joining pose, and
- joining the cover lens to the housing with the suction head in the corrected joining pose.
After successful set-up, the joining of the cover lens with the housing produces a dimensionally accurate lighting device, and ideally a large number of joining processes can be carried out until the joining device needs to be set up again. Thus, in the context of series production, the effort for checking the fabricated lighting devices and for corrective interventions in the positioning of the joining device is advantageously reduced.

In a preferred embodiment, the corrected joining pose of the suction head is adjusted to the ambient temperature by taking into account the related thermal expansion of the cover lens, the housing and/or the suction head. For example, in a production hall that is operated around the clock and is not air-conditioned, there may be ambient temperature differences between a minimum temperature of 10°C and a maximum temperature of over 30°C, and the thermal expansion of the said plastic components may be in the order of a millimetre. To correct for thermal expansion, the temperature-dependent geometries of the cover lens, the housing and the suction head are measured independently of each other and tabulated for each ambient temperature in question, so that suitable table values can be accessed for the purpose of automatically adjusting the pose of the suction head.

Moreover, the invention relates to a system for joining a cover lens to a housing of a motor vehicle lighting device by the method according to one of the aforementioned embodiments, at least comprising:
- the joining device for joining the cover lens to the housing, wherein the joining device features the mounting fixture and the robot with the suction head,
- a measuring device for measuring the pose of the cover lens relative to the reference-point system, and
- a control unit for
   ∘ determining the set of translations and/or rotations, which transfer the cover lens to the optimal pose with minimal deviations from the target pose,
   ∘ correcting the initial joining pose of the suction head with the determined set of translations and/or rotations, and
   ∘ adjusting the corrected joining pose of the suction head to the ambient temperature by taking into account the related thermal expansion of the cover lens, the housing and/or the suction head.

### PREFERRED EMBODIMENT

Additional details, characteristics and advantages of the object of the invention are disclosed in the following description of the respective figures, which in an exemplary fashion show a preferred embodiment of the invention. The figures show:
- Fig. 1:: a perspective view of a housing,
- Fig. 2:: a perspective view of a cover lens,
- Fig. 3:: a perspective view of a lighting device in a coordinate-measuring machine,
- Fig. 4a:: a perspective view of an articulated robot with a suction head,
- Fig. 4b:: a detail of Fig. 4a in partial cross-section view,
- Fig. 5a:: a perspective view of a housing in a mounting fixture,
- Fig. 5b:: a detail to Fig. 5a, and
- Fig. 6:: a flow chart representation of the inventive methods.

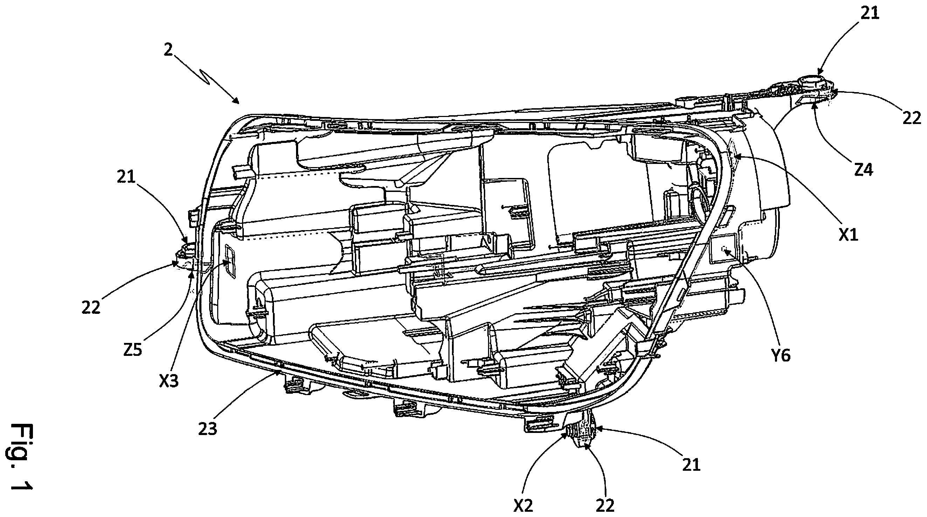

Fig. 1 shows an exemplary housing 2 as an injection-moulded component made of a thermoplastic material, which is provided for accommodating the lighting components of a motor vehicle lighting device and for joining with a cover lens in accordance with the joining method according to the invention. The joint is provided as an adhesive bond, for which purpose the adhesive channel 23 runs around the front of the housing 2. During the joining process, the adhesive channel 23 is filled with an adhesive and a corresponding, circumferential joining section on the cover lens is immersed in the adhesive channel 23 in the joining pose of the cover lens.

The housing 2 features the three hollow screws 21 which extend through the peripherally protruding lugs 22 and are oriented parallel or perpendicular to each other. The bottom surfaces of the hollow screws 21 serve as a support in the later mounting position in a vehicle body. The reference points X2, Z4, Z5 as part of the reference-point system are defined on the bottom surfaces of the hollow screws 21, whereby the reference points X2, Z4, Z5 can in particular also be part of the OEM customer's reference-point system. Changing the screw-in depth of the hollow screws 21 yields an option to adapt the reference points X2, Z4, Z5 during the process of setting-up the joining device or during the subsequent joining process.

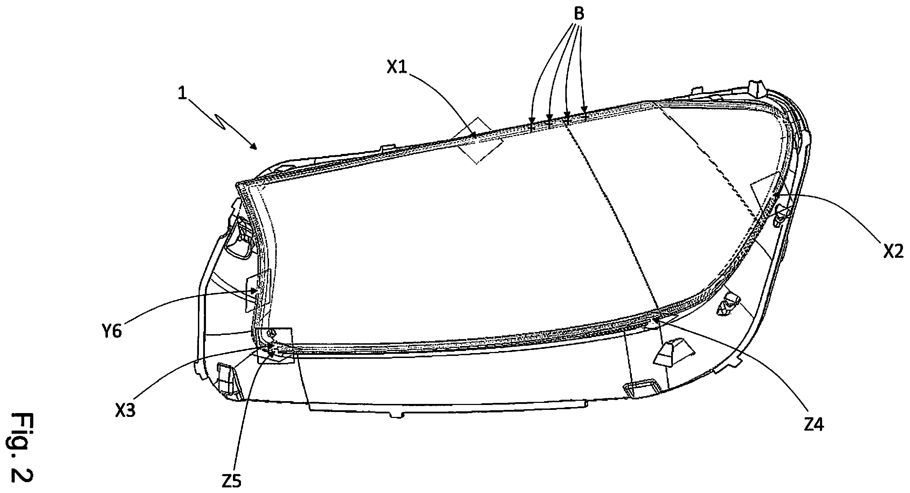

Fig. 2 shows an associated cover lens 1, which is an injection-moulded component made of a transparent plastic. The six reference points X1, X2, X3, Z4, Z5, Y6 on the surface of the lens 1 together with the reference points on the housing (see Fig. 1) form the reference-point system. Furthermore, the measuring-point system comprising the various measuring points B is defined on the surface of the cover lens 1, the positions of which are measured in the joined unit relative to the reference-point system to quantify the pose of the cover lens 1 on the housing. The measuring point system advantageously comprises a number of about one hundred measuring points, of which only a few examples are shown in Fig. 2 for the sake of clarity.

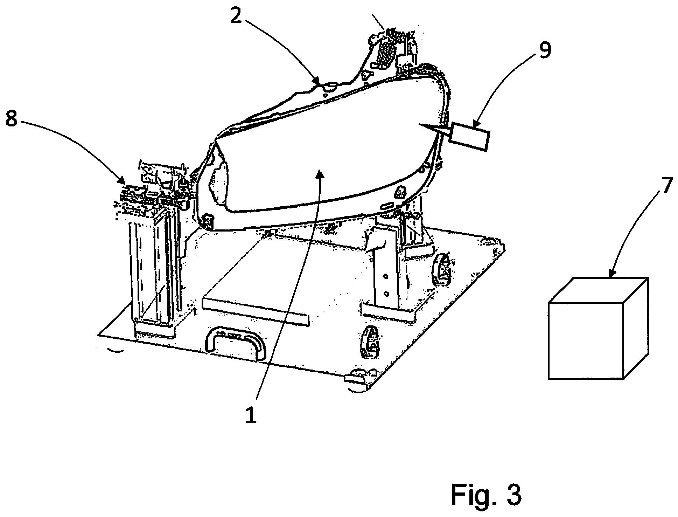

Fig. 3 shows a lighting device with a cover lens 1 and a housing 2 on a coordinate-measuring machine comprising the holder 8 and the tactile measuring head 9. The housing 2 is held stress-free in the holder 8 via the bottom surfaces of the hollow screws 21 and the coordinate-measuring machine measures the pose of the cover lens 1 based on the positions of the measuring points relative to the reference point system.

The control unit 7 serves to process the measurement data collected with the coordinate-measuring machine during the set-up procedure according to the invention. The regression-analytical determination of the set of translations and/or rotations, which transfer the cover lens 1 into an optimal pose with minimal deviations from the target pose, is carried out automatically by the control unit 7. Furthermore, the control unit 7 automatically performs the correction of the initial joining pose of the suction head based on the previously determined set of translations and/or rotations. For this purpose, the control unit 7 performs, for example, a coordinate transformation that represents the set of translations and/or rotations in relation to a tool centre point as a virtual reference point for the pose of the articulated robot and the suction head.

Within the framework of the joining method according to the invention, the control unit 7 is further designed to adapt the corrected joining pose of the suction head to the ambient temperature by making an appropriate correction by means of the tabulated thermal expansion dimensions of the cover lens, housing and/or suction head, which correction ensures a dimensionally accurate joining of the cover lens to the housing.

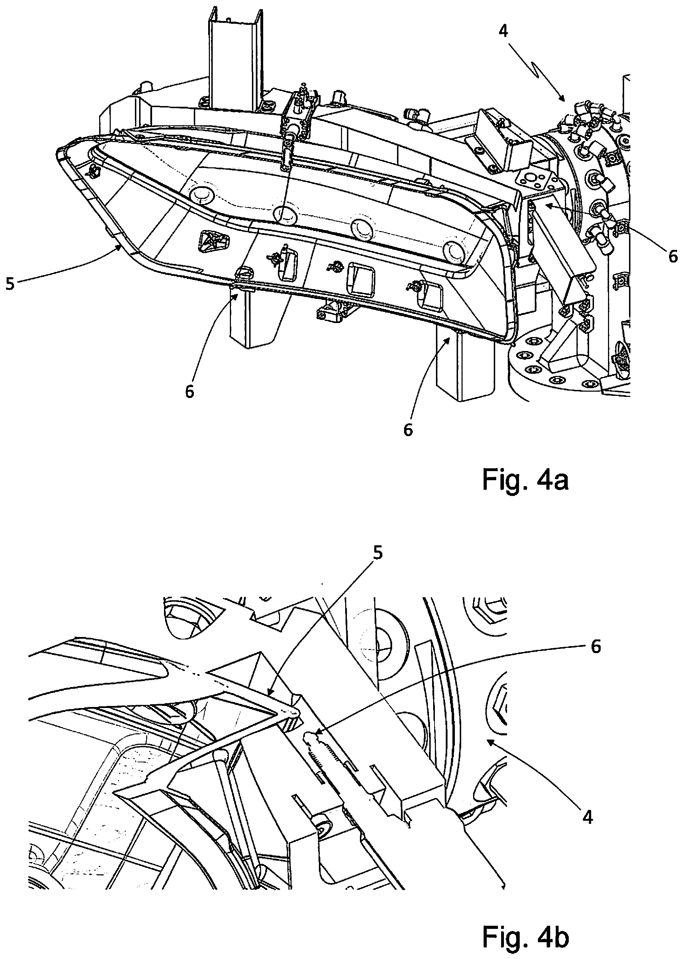

Fig. 4a shows the suction head 5 for pick-up of a cover lens, wherein the suction head 5 is held as an end effector on the articulated robot 4. Fig. 4b shows a partial cross-section view of a detail of Fig. 4a, in which a position sensor 6 is shown, which checks the correct seating of the suction head 5 at the articulated robot 4 and thus of the cover lens to be picked up thereon. In particular, several such position sensors 6 can be arranged distributed along the suction head 5.

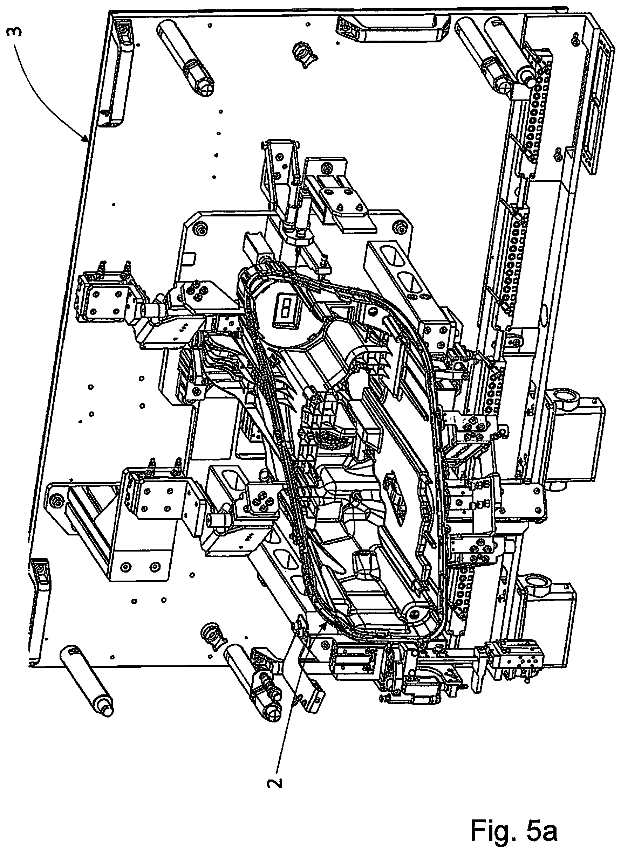

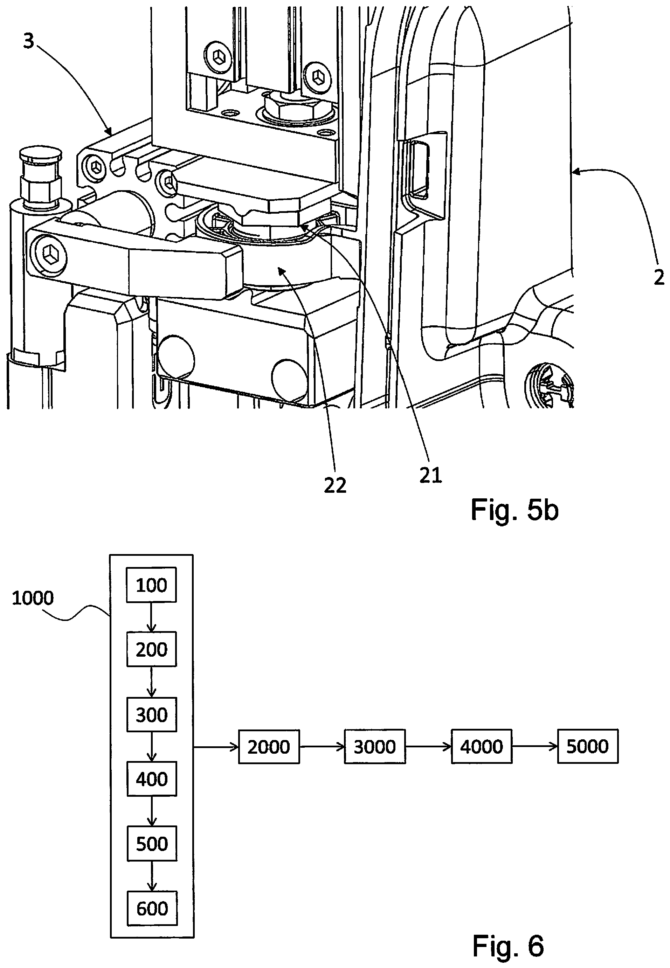

Fig. 5a shows a housing 2 in a mounting fixture 3 as part of a joining device, and Fig. 5b shows an associated detail. The housing 2 is mounted stress-free on the bottom surfaces of the hollow screws 21, which corresponds to the mounting situation in the holder of the coordinate measuring machine. In interaction with the further holding means 31, a 6-value alignment of the housing 2 takes place.

The system for joining a cover lens to a housing of a motor vehicle lighting device according to the invention at least comprises a joining device with a mounting fixture and a robot with a suction head, measuring device, e.g., a coordinate-measuring machine, and a control unit like shown in the aforementioned figures.

Fig. 6 shows a flow chart illustrating the two methods according to the invention. The method 1000 of setting up a joining device represents the first step of the joining method according to the invention and comprises the following steps:
- inserting 100 a housing into the mounting fixture and a cover lens into the suction head,
- transferring 200 the suction head to an initial joining pose,
- joining 300 the cover lens to the housing with the suction head in the initial joining pose,
- measuring 400 the pose of the cover lens relative to a reference-point system, which comprises reference points on the surface of the housing and/or the cover lens,
- determining 500 a set of translations and/or rotations, which transfer the cover lens to an optimal pose with minimal deviations from a target pose, and
- correcting 600 the initial joining pose of the suction head with the determined set of translations and/or rotations.

After successful completion of the method 1000, the joining device is set up for the dimensionally accurate joining of cover lenses with housings and, in the joining method according to the invention, the following steps are then carried out and expediently repeated in the course of a series production:
- adjusting 2000 the corrected joining pose of the suction head to the ambient temperature by taking into account the related thermal expansion of the cover lens, the housing and/or the suction head,
- inserting 3000 the housing into the mounting fixture and the cover lens into the suction head,
- transferring 4000 the suction head to the corrected joining pose, and
- joining 5000 the cover lens to the housing with the suction head in the corrected joining pose.

### List of numerals:

- 1: cover lens
- 2: housing
- 21: hollow screw
- 22: lug
- 23: adhesive channel
- 3: mounting fixture
- 31: holding means
- 4: articulated robot
- 5: suction head
- 6: position sensor
- 7: control unit
- 8: holder
- 9: measuring head

- X1, X2, X3, Z4, Z5, Y6: reference point
- B: measuring point

## Claims

1. Method (1000) of setting up a joining device for joining a cover lens (1) to a housing (2) of a motor vehicle lighting device, wherein the joining device features a mounting fixture (3) and a robot (4) with a suction head (5), and wherein the method (1000) features the step of inserting (100) a housing (2) into the mounting fixture (3) and a cover lens (1) into the suction head (5), and wherein the method (1000) is **characterized by** featuring at least the following steps:
- transferring (200) the suction head (5) to an initial joining pose,
- joining (300) the cover lens (1) to the housing (2) with the suction head (5) in the initial joining pose,
- measuring (400) the pose of the cover lens (1) relative to a reference-point system, which comprises reference points (X1, X2, X3, Z4, Z5, Y6) on the surface of the housing (2) and/or the cover lens (1),
- determining (500) a set of translations and/or rotations, which transfer the cover lens (1) to an optimal pose with minimal deviations from a target pose, and
- correcting (600) the initial joining pose of the suction head (5) with the determined set of translations and/or rotations.

2. Method (1000) according to claim 1, **characterised in that** the reference-point system comprises six reference points (X1, X2, X3, Z4, Z5, Y6) each on the surface of the housing (2) and of the cover lens (3).

3. Method (1000) according to claim 1 or 2, **characterised in that** a measuring-point system is defined, which features measuring points (B) on the surface of the cover lens (1), wherein the pose of the cover lens (1) is defined by the positions of the measuring points (B) relative to the reference-point system.

4. Method (1000) according to one of the previous claims, **characterised in that** the set of translations and/or rotations for correcting the initial joining pose of the suction head (5) is determined by means of linear regression analysis, especially by means of least-squares fitting.

5. Method (1000) according to one of the previous claims, **characterised in that** the housing (2) features three hollow screws (21), which each extend through protruding lugs (22) and which are oriented mutually perpendicular or parallel, wherein each one reference point (X2, Z4, Z5) is defined on the bottom surface of the hollow screws (21).

6. Method (1000) according to one of the previous claims, **characterised in that** the mounting fixture (3) receives the housing (2) stress-free at reference points (X2, Z4, Z5) on the surface of the housing (2).

7. Method (1000) according to one of the previous claims, **characterised in that** the mounting fixture (3) and/or the suction head (5) are provided with position sensors (6), by means of which the proper insertion of the housing (2) into the mounting fixture (3) and/or of the cover lens (1) into the suction head (5) is controlled.

8. Method of joining a cover lens (1) to a housing (2) of a motor vehicle lighting device by a joining device, wherein the joining device features a mounting fixture (3) and a robot (4) with a suction head (5), and wherein the method features at least the following steps:
- setting up the joining device by the method (1000) according to one of the previous claims,
- inserting (3000) the housing (2) into the mounting fixture (3) and the cover lens (1) into the suction head (5),
- transferring (4000) the suction head (5) to the corrected joining pose, and
- joining (5000) the cover lens (1) to the housing (2) with the suction head (5) in the corrected joining pose.

9. Method according to claim 8, **characterised in that** the corrected joining pose of the suction head (5) is adjusted (2000) to the ambient temperature by taking into account the related thermal expansion of the cover lens (1), the housing (2) and/or the suction head (5).

10. System for joining a cover lens (1) to a housing (2) of a motor vehicle lighting device by the method according to claim 8 or 9, comprising the joining device for joining the cover lens (1) to the housing (2), wherein the joining device features the mounting fixture (3) and the robot (4) with the suction head (5), wherein the system is **characterized by** at least comprising:
- a measuring device for measuring (400) the pose of the cover lens (1) relative to the reference-point system, and
- a control unit (7) for
∘ determining (500) the set of translations and/or rotations, which transfer the cover lens (1) to the optimal pose with minimal deviations from the target pose,
∘ correcting (600) the initial joining pose of the suction head (5) with the determined set of translations and/or rotations, and
∘ adjusting (3000) the corrected joining pose of the suction head (5) to the ambient temperature by taking into account the related thermal expansion of the cover lens (1), the housing (2) and/or the suction head (5).

## Patentansprüche

1. Verfahren (1000) zum Einrichten einer Fügevorrichtung zum Fügen einer Abdeckscheibe (1) mit einem Gehäuse (2) einer Kraftfahrzeugbeleuchtungseinrichtung, wobei die Fügevorrichtung eine Montagebefestigung (3) und einen Roboter (4) mit einem Saugkopf (5) aufweist, und wobei das Verfahren (1000) den Schritt des Einsetzens (100) eines Gehäuses (2) in die Montagebefestigung (3) und einer Abdeckscheibe (1) in den Saugkopf (5) aufweist, und wobei das Verfahren (1000) **dadurch gekennzeichnet ist, dass** es mindestens die folgenden Schritte aufweist:
- Übertragen (200) des Saugkopfes (5) in eine anfängliche Fügepose,
- Fügen (300) der Abdeckscheibe (1) mit dem Gehäuse (2), wobei sich der Saugkopf (5) in der anfänglichen Fügepose befindet,
- Messen (400) der Pose der Abdeckscheibe (1) relativ zu einem Bezugspunktsystem, das Bezugspunkte (X1, X2, X3, Z4, Z5, Y6) auf der Oberfläche des Gehäuses (2) und/oder der Abdeckscheibe (1) umfasst,
- Bestimmen (500) einer Zusammenstellung von Translationen und/oder Rotationen, die die Abdeckscheibe (1) in eine optimale Pose mit minimalen Abweichungen von einer Zielpose übertragen, und
- Korrigieren (600) der anfänglichen Fügepose des Saugkopfes (5) mit der bestimmten Zusammenstellung von Translationen und/oder Rotationen.

2. Verfahren (1000) nach Anspruch 1, **dadurch gekennzeichnet,**
**dass** das Bezugspunktsystem sechs Bezugspunkte (X1, X2, X3, Z4, Z5, Y6), jeweils auf der Oberfläche des Gehäuses (2) und der Abdeckscheibe (3), umfasst.

3. Verfahren (1000) nach Anspruch 1 oder 2, **dadurch gekennzeichnet, dass** ein Messpunktsystem definiert ist, das Messpunkte (B) auf der Oberfläche der Abdeckscheibe (1) aufweist, wobei die Pose der Abdeckscheibe (1) durch die Positionen der Messpunkte (B) relativ zum Bezugspunktsystem definiert ist.

4. Verfahren (1000) nach einem der vorhergehenden Ansprüche,
**dadurch gekennzeichnet, dass** die Zusammenstellung von Translationen und/oder Rotationen zum Korrigieren der anfänglichen Pose des Saugkopfes (5) mittels einer linearen Regressionsanalyse, insbesondere mittels einer Anpassung der kleinsten Quadrate, bestimmt wird.

5. Verfahren (1000) nach einem der vorgehenden Ansprüche, **dadurch gekennzeichnet, dass** das Gehäuse (2) drei Hohlschrauben (21) aufweist, die sich jeweils durch vorstehende Ösen (22) erstrecken und die senkrecht oder parallel zueinander ausgerichtet sind, wobei jeder einzelne Bezugspunkt (X2, Z4, Z5) auf der Unterseite der Hohlschrauben (21) definiert ist.

6. Verfahren (1000) nach einem der vorhergehenden Ansprüche, **dadurch gekennzeichnet, dass** die Montagebefestigung (3) das Gehäuse (2) belastungsfrei an Bezugspunkten (X2, Z4, Z5) auf der Oberfläche des Gehäuses (2) aufnimmt.

7. Verfahren (1000) nach einem der vorhergehenden Ansprüche, **dadurch gekennzeichnet, dass** die Montagebefestigung (3) und/oder der Saugkopf (5) mit Positionssensoren (6) versehen sind, mittels derer das ordnungsgemäße Einsetzen des Gehäuses (2) in die Montagebefestigung (3) und/oder der Abdeckscheibe (1) in den Saugkopf (5) gesteuert wird.

8. Verfahren zum Fügen einer Abdeckscheibe (1) mit einem Gehäuse (2) einer Kraftfahrzeugbeleuchtungseinrichtung durch eine Fügevorrichtung, wobei die Fügevorrichtung eine Montagebefestigung (3) und einen Roboter (4) mit einem Saugkopf (5) aufweist, und wobei das Verfahren mindestens die folgenden Schritte aufweist:
- Einrichten der Fügevorrichtung durch das Verfahren (1000) nach einem der vorhergehenden Ansprüche,
- Einsetzen (3000) des Gehäuses (2) in die Montagebefestigung (3) und der Abdeckscheibe (1) in den Saugkopf (5),
- Übertragen (4000) des Saugkopfes (5) in die korrigierte Fügepose, und
- Fügen (5000) der Abdeckscheibe (1) mit dem Gehäuse (2), wobei sich der Saugkopf (5) in der korrigierten Fügepose befindet.

9. Verfahren nach Anspruch 8, **dadurch gekennzeichnet, dass** die korrigierte Fügepose des Saugkopfes (5) unter Berücksichtigung der entsprechenden thermischen Ausdehnung der Abdeckscheibe (1), des Gehäuses (2) und/oder des Saugkopfes (5) an die Umgebungstemperatur angepasst wird (2000).

10. System zum Fügen einer Abdeckscheibe (1) mit einem Gehäuse (2) einer Kraftfahrzeugbeleuchtungseinrichtung durch das Verfahren nach Anspruch 8 oder 9, umfassend die Fügevorrichtung zum Fügen der Abdeckscheibe (1) mit dem Gehäuse (2), wobei die Fügevorrichtung die Montagebefestigung (3) und den Roboter (4) mit dem Saugkopf (5) aufweist, wobei das System **dadurch gekennzeichnet ist, dass** es mindestens Folgendes umfasst:
- eine Messvorrichtung zum Messen (400) der Pose der Abdeckscheibe (1) relativ zum Bezugspunktsystem, und
- eine Steuereinheit (7) zum
∘ Bestimmen (500) der Zusammenstellung von Translationen und/oder Rotationen, die die Abdeckscheibe (1) in die optimale Pose mit minimalen Abweichungen von der Zielpose übertragen,
∘ Korrigieren (600) der anfänglichen Fügepose des Saugkopfes (5) mit der bestimmten Zusammenstellung von Translationen und/oder Rotationen, und
∘ Anpassen (3000) der korrigierten Fügepose des Saugkopfes (5) an die Umgebungstemperatur unter Berücksichtigung der entsprechenden thermischen Ausdehnung der Abdeckscheibe (1), des Gehäuses (2) und/oder des Saugkopfes (5).

## Revendications

1. Méthode (1000) de mise en place d'un dispositif d'assemblage pour l'assemblage d'une lentille de recouvrement (1) à un boîtier (2) d'un dispositif d'éclairage de véhicule automobile, sachant que le dispositif d'assemblage comprend un support de fixation (3) et un robot (4) muni d'une tête d'aspiration (5), que la méthode (1000) comprend l'étape d'insertion (100) d'un boîtier (2) dans le support de fixation (3) et d'une lentille de recouvrement (1) dans la tête d'aspiration (5) et que la méthode (1000) est **caractérisée en ce qu'**elle comprend au moins les étapes suivantes :
- déplacement (200) de la tête d'aspiration (5) vers une position d'assemblage initiale,
- assemblage (300) de la lentille de recouvrement (1) au boîtier (2) avec la tête d'aspiration (5) dans la position d'assemblage initiale,
- mesure (400) de la position de la lentille de recouvrement (1) par rapport à un système de points de référence comprenant les points de référence (X1, X2, X3, Z4, Z5, Y6) sur la surface du boîtier (2) et/ou de la lentille de recouvrement (1),
- détermination (500) d'un ensemble de translations et/ou rotations amenant la lentille de recouvrement (1) dans une position optimale avec des écarts minimaux par rapport à une position cible et
- correction (600) de la position d'assemblage initiale de la tête d'aspiration (5) à l'aide de l'ensemble de translations et/ou rotations déterminé.

2. Méthode (1000) selon la revendication 1 **caractérisée en ce que** le système de points de référence comprend six points de référence (X1, X2, X3, Z4, Z5, Y6) situés sur la surface du boîtier (2) et de la lentille de recouvrement (3).

3. Méthode (1000) selon la revendication 1 ou 2 **caractérisée en ce qu'**un système de points de mesure est défini avec des points de mesure (B) sur la surface de la lentille de recouvrement (1), la position de la lentille de recouvrement (1) étant définie par les positions des points de mesure (B) par rapport au système de points de référence.

4. Méthode (1000) selon l'une des revendications précédentes **caractérisée en ce que** l'ensemble des translations et/ou rotations permettant de corriger la position d'assemblage initiale de la tête d'aspiration (5) est déterminé au moyen d'une analyse de régression linéaire, notamment au moyen d'un ajustement aux moindres carrés.

5. Méthode (1000) selon l'une des revendications précédentes **caractérisée en ce que** le boîtier (2) comprend trois vis creuses (21) traversant chacune des cosses protubérantes (22) et orientées de manière mutuellement perpendiculaire ou parallèle, chaque point de référence (X2, Z4, Z5) étant défini sur la surface inférieure des vis creuses (21).

6. Méthode (1000) selon l'une des revendications précédentes **caractérisée en ce que** le dispositif de fixation (3) reçoit le boîtier (2) sans contrainte au niveau des points de référence (X2, Z4, Z5) situés sur la surface du boîtier (2).

7. Méthode (1000) selon l'une des revendications précédentes **caractérisée en ce que** le dispositif de fixation (3) et/ou la tête d'aspiration (5) sont équipés de capteurs de position (6) permettant de contrôler l'insertion correcte du boîtier (2) dans le dispositif de fixation (3) et/ou de la lentille de recouvrement (1) dans la tête d'aspiration (5).

8. Méthode d'assemblage d'une lentille de recouvrement (1) à un boîtier (2) d'un dispositif d'éclairage de véhicule automobile à l'aide d'un dispositif d'assemblage, dans lequel le dispositif d'assemblage comprend un dispositif de fixation (3) et un robot (4) muni d'une tête d'aspiration (5) et dans lequel la méthode comprend au moins les étapes suivantes :
- mise en place du dispositif d'assemblage au moyen de la méthode (1000) selon l'une des revendications précédentes,
- insertion (3000) du boîtier (2) dans le dispositif de fixation (3) et de la lentille de recouvrement (1) dans la tête d'aspiration (5),
- déplacement (4000) de la tête d'aspiration (5) vers la position d'assemblage corrigée et
- assemblage (5000) de la lentille de recouvrement (1) au boîtier (2) à l'aide de la tête d'aspiration (5) dans la position d'assemblage corrigée.

9. Méthode selon la revendication 8 **caractérisée en ce que** la position d'assemblage corrigée de la tête d'aspiration (5) est adaptée (2000) à la température ambiante en tenant compte de la dilatation thermique correspondante de la lentille de recouvrement (1), du boîtier (2) et/ou de la tête d'aspiration (5).

10. Système d'assemblage d'une lentille de recouvrement (1) à un boîtier (2) d'un dispositif d'éclairage de véhicule automobile en suivant la méthode selon la revendication 8 ou 9, comprenant le dispositif d'assemblage destiné à assembler la lentille de recouvrement (1) au boîtier (2), dans lequel le dispositif d'assemblage comprend le dispositif de fixation (3) et le robot (4) muni de la tête d'aspiration (5), le système étant **caractérisé en ce qu'**il comprend au moins :
- un dispositif de mesure permettant de mesurer (400) la position de la lentille de recouvrement (1) par rapport au système de points de référence et
- une unité de commande (7) permettant de
∘ déterminer (500) l'ensemble de translations et/ou rotations amenant la lentille de recouvrement (1) dans la position optimale avec des écarts minimaux par rapport à la position cible,
∘ corriger (600) la position d'assemblage initiale de la tête d'aspiration (5) à l'aide de l'ensemble de translations et/ou rotations déterminé et
∘ adapter (3000) la position d'assemblage corrigée de la tête d'aspiration (5) à la température ambiante en tenant compte de la dilatation thermique correspondante de la lentille de recouvrement (1), du boîtier (2) et/ou de la tête d'aspiration (5).
